# EUROPEAN PATENT SPECIFICATION

(11) **EP 3 549 349 B1**
(45) Date of publication and mention of the grant of the patent: **08.06.2022**
(21) Application number: 17798293.1
(22) Date of filing: 10.11.2017
(51) Int. Cl.: H04N 21/488

(54) **A DECODER, ENCODER, COMPUTER PROGRAM AND METHOD**
EIN KODIERER, DEKODIERER, COMPUTERPROGRAMM UND METHODE
DÉCODEUR, ENCODEUR, PROGRAMME INFORMATIQUE, ET PROCÉDÉ

(30) Priority: 29.11.2016 GB 201620233
(43) Date of publication of application: 09.10.2019
(73) Proprietor: Sony Europe B.V., Weybridge, Surrey KT13 0XW (GB); Sony Group Corporation, Tokyo 108-0075 (JP)
(72) Inventor: SZUCS, Paul, 73734 Esslingen (DE)
(74) Representative: D Young & Co LLP
(86) International application number: PCT/GB2017/053392
(87) International publication number: WO 2018/100332

(56) References cited:
- JP-A- 2016 006 958
- JP-A- 2016 116 032
- US-A1- 2005 105 888
- US-A1- 2006 245 727
- "Digital Video Broadcasting (DVB); Subtitling systems", EUROPEAN STANDARD, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.5.1, 1 January 2014 (2014-01-01), XP014180081,
- "Portable Network Graphics (PNG) Specification (Second Edition) Information technology ? Computer graphics and image processing ? Portable Network Graphics (PNG): Functional specification. ISO/IEC 15948:2003", INTERNET CITATION, 10 November 2003 (2003-11-10), pages 1-69, XP007905245, Retrieved from the Internet: URL:http://www.w3.org/TR/PNG/ [retrieved on 2008-07-18]
- DVB ORGANIZATION: "A343S34-169r12-Captions-and-Subtitles.pdf ", DVB, DIGITAL VIDEO BROADCASTING, C/O EBU - 17A ANCIENNE ROUTE - CH-1218 GRAND SACONNEX, GENEVA - SWITZERLAND, 2 November 2016 (2016-11-02), XP017851321,
- W3c: "TTML Profiles for Internet Media Subtitles and Captions 1.0 (IMSC1)", , 8 March 2016 (2016-03-08), XP055435328, Retrieved from the Internet: URL:https://www.w3.org/TR/2016/PR-ttml-ims c1-20160308/ [retrieved on 2017-12-14]
- PAUL SZUCS: "en_300743v010601p", DVB, DIGITAL VIDEO BROADCASTING, C/O EBU - 17A ANCIENNE ROUTE - CH-1218 GRAND SACONNEX, GENEVA - SWITZERLAND , no. r2 9 November 2016 (2016-11-09), XP017853110, Retrieved from the Internet: URL:https://www.dvb.org/resources/restrict ed/members/documents/TM-SUB/TM-SUB0145r2_e n_300743v010601p.doc [retrieved on 2016-11-09]
- PAUL SZUCS: "BMSUB PNG conversion", DVB, DIGITAL VIDEO BROADCASTING, C/O EBU - 17A ANCIENNE ROUTE - CH-1218 GRAND SACONNEX, GENEVA - SWITZERLAND , 19 December 2016 (2016-12-19), XP017853138, Retrieved from the Internet: URL:https://www.dvb.org/resources/restrict ed/members/documents/TM-SUB/TM-SUB0179_BMS UB-PNG-conversion.pdf [retrieved on 2016-12-19]

## Description

### BACKGROUND

### Field of the Disclosure

The present technique relates to a decoder, encoder, computer program and method.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

It is known to transmit subtitles as either text or as bitmaps. In the case of bitmaps, the mechanism for transmitting these subtitles is set out in [1].

However, two issues have been identified by the inventor of this disclosure.

Firstly, a constant desire is to reduce the amount of data transmitted and processing in subtitles. It is therefore desirable to apply compression to the bitmaps before transmission as subtitles.

Secondly, other open-source formats such as the Portable Network Graphics Standard exist which are becoming increasingly popular. Given this, subtitles may be produced in the PNG format which might need conversion into a subtitling system framework format before transmission. It is therefore desirable to enable subtitles to be originated in the PNG format and to make their conversion into subtitles as simple and convenient as possible.

It is an aim of the disclosure to address these issues. The disclosure is not limited to addressing these aims and issues.

Background references include PAUL SZUCS: "en_300743v010601p", DVB, DIGITAL VIDEO BROADCASTING, C/O EBU - 17A ANCIENNE ROUTE - CH-1218 GRAND SACONNEX, GENEVA - SWITZERLAND, no. r2 9 November 2016 (2016-11-09), URL: https://www.dvb.org/resources/restricted/members/documents/TMSUB/TM-SUB0145r2_en 300743v010601p.doc, which discloses a working draft of ETSI EN 300 743 V1.6.1.

### SUMMARY

The invention is defined by the claims.

Other features and embodiments may be generally written as in the following claims appended hereto.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 shows a television receiver 100 according to embodiments of the present disclosure;
Figure 2 shows a television transmission device 200 according to embodiments of the present disclosure
Figure 3 shows a schematic diagram of the process 300 of subtitle bitmap encoding, carriage and decoding according to the subtitling specification set out in [1];
Figure 4 shows a schematic diagram of the known interlaced type scan subtitle encoding process 400;
Figure 5 shows the syntax of the object_data_segment using the interlaced type scan;
Figures 6A and 6B show schematic diagrams of two types of progressive type scan subtitle encoding process 600 according to embodiments of the disclosure;
Figure 7 shows the object_data_segment structure 700 according to embodiments of the disclosure;
Figure 8 shows a flow chart 800 explaining a process carried out in the subtitle encoder 210 according to embodiments of the disclosure;
Figure 9 shows a flow chart 900 explaining a process carried out in the subtitle decoder 110 according to embodiments of the disclosure;
Figure 10 shows a flow diagram of a process 1000 carried out by the subtitle encoder 210;
Figure 11 is a flowchart showing a process 1100 carried out by the subtitle decoder 110;
Figure 12 shows a flowchart of a process 1200 according to embodiments of the disclosure;
Figure 13 shows a conversion process steps for a PNG file that is compliant with the requirement of the subtitle according to embodiments; and
Figure 14 shows a flowchart of a process 1300 according to embodiments of the disclosure.

### DESCRIPTION OF THE EMBODIMENTS

Referring now to the drawings, wherein like reference numerals designate identical or corresponding parts throughout the several views.

The following description is split into three parts. The first part is a description explaining the mechanism for transmission and reception of subtitle bitmaps in a progressive scan system.

The second part is a description explaining the mechanism for compressing subtitle bitmaps. This compression technique is applicable to bitmaps sent in an interlace scan or progressive scan system.

The third part is a description explaining the mechanism for transmission and reception of PNG subtitles. It will be apparent to the skilled person from the following that the transmission and reception of PNG subtitles may occur in either the existing interlace scan system or the progressive scan system described in the first part.

### Part 1 - Progressive Scan System

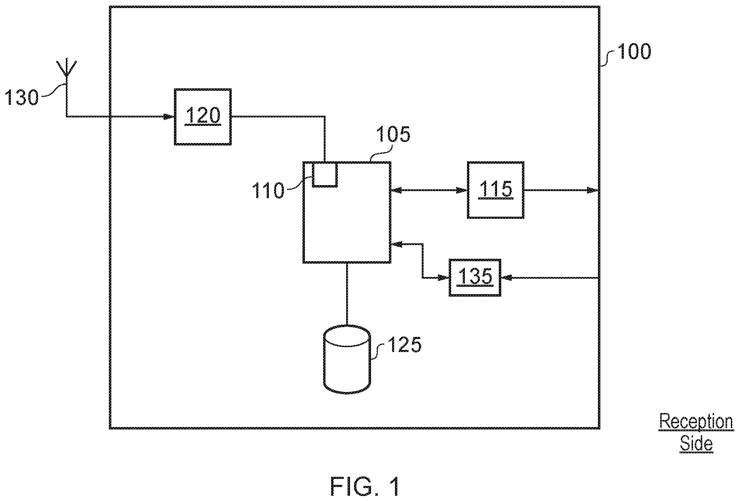

Figure 1 shows a television receiver 100 according to embodiments of the present disclosure. The television receiver 100 may be a set-top box receiving terrestrial television, cable television or satellite television, or may be a device receiving television services via a data connection such as broadband Internet connection, or via a mobile communication network. The television receiver 100 may be integrated into a television display device or an optical disc reader such as a Blu-Ray or DVD player. Alternatively, the television receiver may be integrated into a games console, Personal Computer or any kind of suitable device. The television receiver may take the form of a software application that is executed on a hand-held device or on any of the aforementioned device types. The television receiver is one example of a device having a decoder or some kind of decoding mechanism to decode a television signal, for example.

The operation of the television receiver 100 is controlled by a controller 105. The controller 105 may take the form of a controller circuitry which is typically made of semiconductor material and which runs under the control of computer software embodied as computer readable code. This code may be stored within the controller 105 or may be stored elsewhere within the television receiver 100. In this specific example, the computer software is stored within storage medium 125 which is connected to the controller 105. Storage medium 125 may be formed of any kind of suitable media such as solid-state storage or magnetic or optical readable media. Other data such as user profile information, application data, and content may be also stored on storage medium 125.

Also connected to controller 105 is a television decoder 120 that is controlled by operation of the controller 105. The television decoder 120 may take the form of communication circuitry which is configured to receive television signals encoded using the Digital Video Broadcasting (DVB) set of Standards. In embodiments, the encoded television signals may be broadcast or delivered in a multicast or unicast mode over a terrestrial link, a cable link, satellite link, broadband internet connection or over a cellular (mobile telephone) network. The television signals may contain Audio/Video content which may be audio content alone, video or image content alone or both audio content and video (or image) content. Indeed, the television signals may be video or image signals which may also contain audio information.

The television decoder 120 is connected to an antenna 130 which allows these television signals to be received. The antenna 130 may take the form of a Yagi and log-periodic type antenna or a satellite dish, cable head-end or any kind of appropriate reception device. In some television decoder device embodiments, the antenna takes the form of a modem that receives television signals from a cable connection, for example a broadband Internet connection.

The controller 105 is also connected to a user input module 135. The user input module 135 may be a remote control or commander, touchscreen, stylus, keyboard, mouse, gesture recognition system or any kind of device suitable to allow the user to control the operation of the television receiver 100.

The controller 105 is also connected to a user output module 115. The user output module 115 may be a display (into which the television receiver is integrated or connected), wearable technology such as a smart-watch or goggles, or any kind of device suitable to allow the user to receive the televisual output of the television receiver 100.

Within the controller 105 is a subtitle decoder 110 which may be integrated to, or separate from the controller 105. The purpose of the subtitle decoder 110 is to decode subtitles transmitted with, or in another way associated with, the television signal. The operation of the subtitle decoder 110 is controlled by controller 105 and its operation will be described later. The subtitle decoder 110, however, will perform the mechanisms described in the three parts of the present application. The subtitle decoder 110, like the controller 105 may be embodied as circuitry and may be controlled by software stored on storage medium 125.

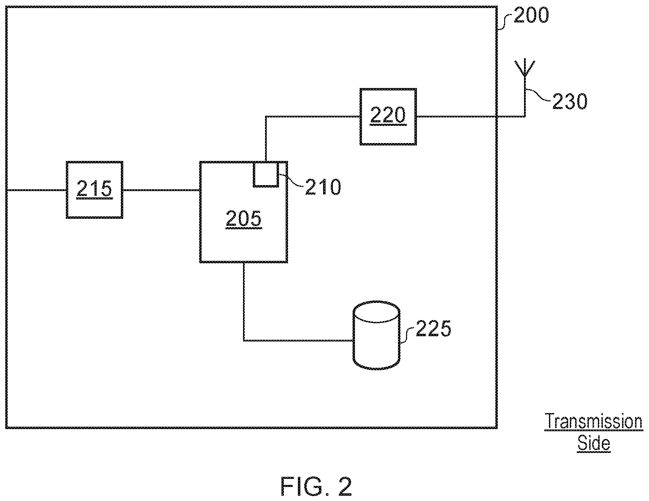

Figure 2 shows a television transmission device 200 according to embodiments of the present disclosure. The television transmission device 200 may be a delivery system transmitting terrestrial television, cable television or satellite television.

The operation of the television transmission device 200 is controlled by a controller 205. The controller 205 may take the form of a controller circuitry which is typically made of semiconductor material and which runs under the control of computer software embodied as computer readable code. This code may be stored within the controller 205 or may be stored elsewhere within the television transmission device 200. In this specific example, the computer software is stored within storage medium 225 which is connected to the controller 205. Storage medium 225 may be formed of any kind of suitable media such as solid-state storage or magnetic or optical readable media. Other data such as user profile information, application data, and content may be also stored on storage medium 225.

Also connected to controller 205 is a television encoder 220. The television encoder 220 may take the form of communication circuitry which is configured to transmit television signals encoded using the Digital Video Broadcasting (DVB) Standard. In embodiments, the encoded television signals may be delivered over a terrestrial link, a cable link, satellite link, broadband Internet connection or over a cellular (mobile telephone) network.

The television encoder 220 is connected to an antenna 230 which allows these television signals to be transmitted or broadcast. For wireline based delivery systems the antenna is replaced by a modem, switch, server, or Content Delivery Network.

The controller 205 is also connected to a user input module 235. The user input module 235 may be a remote control or commander, touchscreen, stylus, keyboard, mouse, voice control, gesture recognition system or any kind of device suitable to allow the user to control the operation of the television transmission device 200.

The controller 205 is also connected to a user output module 215. The user output module 215 may be a display (into which the television receiver is integrated or connected), wearable technology such as a smart-watch or goggles, or any kind of device suitable to allow the user to view the televisual output of the television transmission device 200.

Within the controller 205 is a subtitle encoder 210 which may be integrated to, or separate from the controller 205. The subtitle encoder is a device that encodes subtitles with, or somehow associates the subtitles with, the television signal or the content. The operation of the subtitle encoder 210 is controlled by controller 205 and its operation will be described later. The subtitle encoder 210, however, will perform the mechanisms described in the three parts of the present application. The subtitle encoder 210, like the controller 205 may be embodied as circuitry and may be controlled by software stored on storage medium 225.

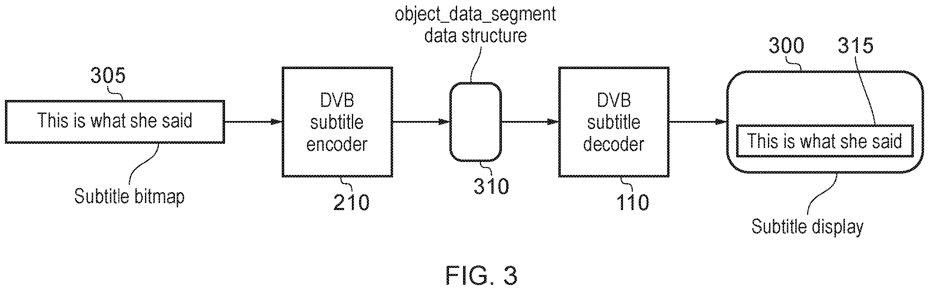

Figure 3 shows a schematic diagram of the process 300 of subtitle bitmap encoding, carriage and decoding according to the subtitling specification set out in [1]. For the avoidance of doubt, the subject matter of [1] is incorporated herein by reference.

The process 300 has a subtitle bitmap 305 which is to be overlaid on the televisual content. In the depicted example the bitmap is a graphical representation of the text "This is what she said". Of course, the bitmap may be any graphical representation such as other words, pictures, logos or the like. The bitmap 305 is fed into the subtitle encoder 210 of Figure 2. The bitmap is encoded within the subtitle encoder 210. In the known system, the subtitle encoder encodes the bitmap into an interlaced-scan type coding. However, in embodiments of the disclosure the subtitle encoder 210 encodes the bitmap straight into a progressive scan-type coding as will be explained later.

The televisual content is multiplexed with the subtitle bitmap is then transmitted or broadcast in block 310 to television receiver 100. In some embodiments the subtitle bitmaps in their encoded form are delivered separately from the televisual content, for example via an Internet connection, and re-combined and synchronised with the televisual content within the television receiver 100. The televisual content is received and decoded within the television receiver 100 and the subtitle bitmap is decoded by the subtitle decoder 110. In the known system, the interlace scan-type coding is decoded and if the display is a progressive type display, the television receiver 100 needs to perform appropriate transformation from the interlaced type scan to progressive scan. However, in embodiments of the present disclosure, the subtitle decoder 110 will receive the subtitle bitmap encoded in a progressive scan-type coding and so this further transformation step within the television receiver 100 is not required. The televisual content including the subtitle bitmap is then displayed in step 315.

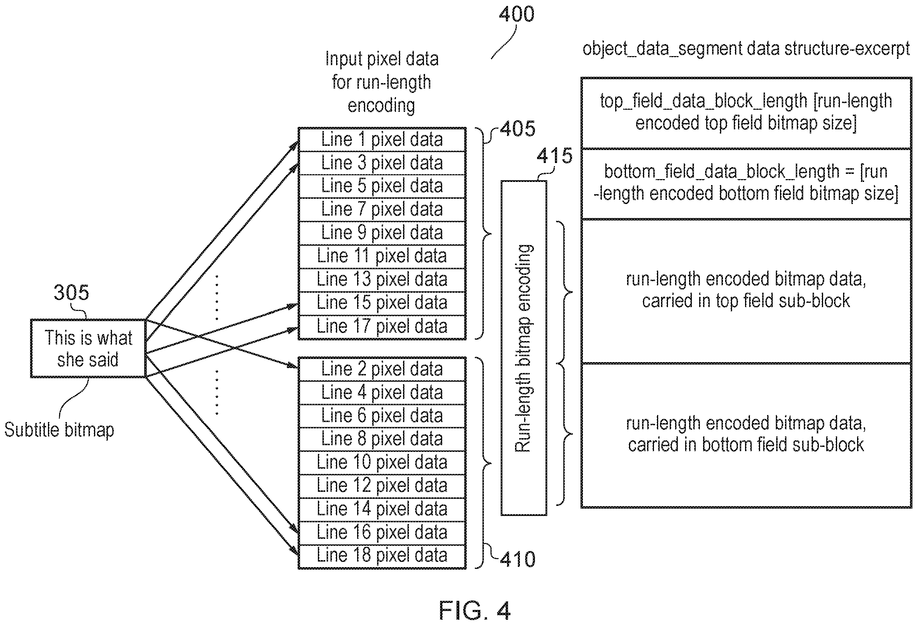

Figure 4 shows a schematic diagram of the known interlaced type scan subtitle encoding process 400. The subtitle bitmap 305 is divided into a top field 405 and a bottom field 410. In the top field 405, the odd numbered pixel lines are encoded and in the bottom field the even numbered pixel lines are encoded. Figure 4 depicts the subtitle bitmap input data as a series of lines mimicking the shape of the subtitle bitmap. This is just for convenience, since it is known that each pixel-data_sub-block is a contiguous series of byte values, with no delineation according to the shape of the bitmap subtitle. These lines of pixel data are then run-length encoded according to the known method in [1] at 415 and carried in the object_data_segment of the DVB Standard set out in [1], with each field's run-length encoded pixel data being carried as two separate fields in the respective sub-blocks. The subtitle bitmaps may also be delivered to receivers without the step of applying run-length encoding or similar simple compression techniques.

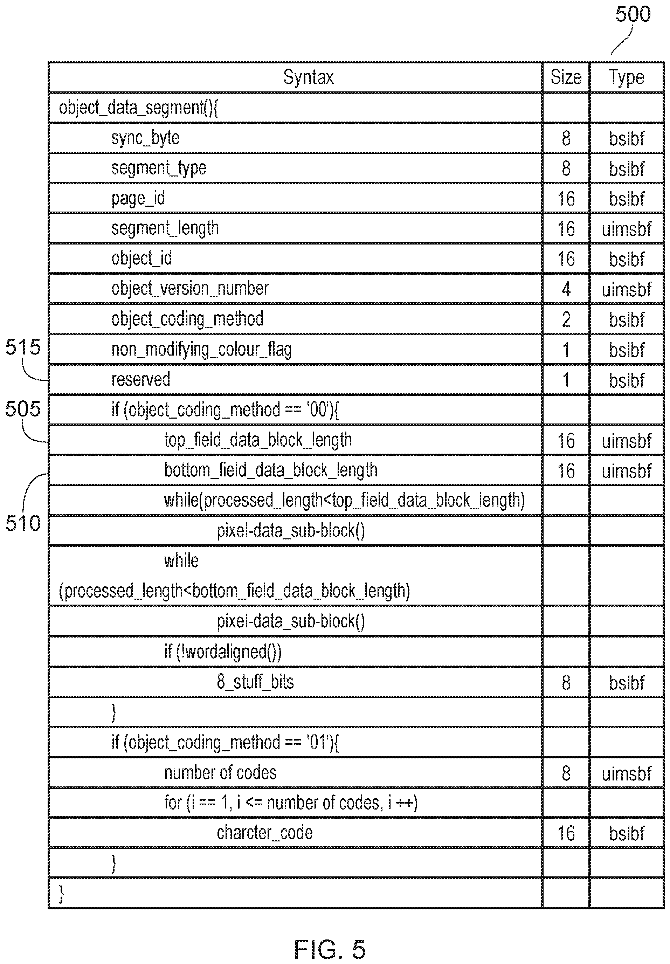

Figure 5 shows the syntax of the object_data_segment using the interlaced type scan. As is seen, the block length of the top field is identified in the top_field_data_block_length 505 and the block length of the bottom field is identified in the bottom_field_data_block_length 510. Moreover, there is a reserved bit 510 which in the known object_data_segment is not allocated.

In this known syntax, therefore, even progressive-scan subtitle bitmaps are pre-processed for carriage in the object_data_segment structure as interlace-scan bitmaps and transmitted as interlace-scan type bitmaps. The television receiver 100 has to then decode the interlace-scan type bitmaps and transform them into progressive scan type bitmaps for display.

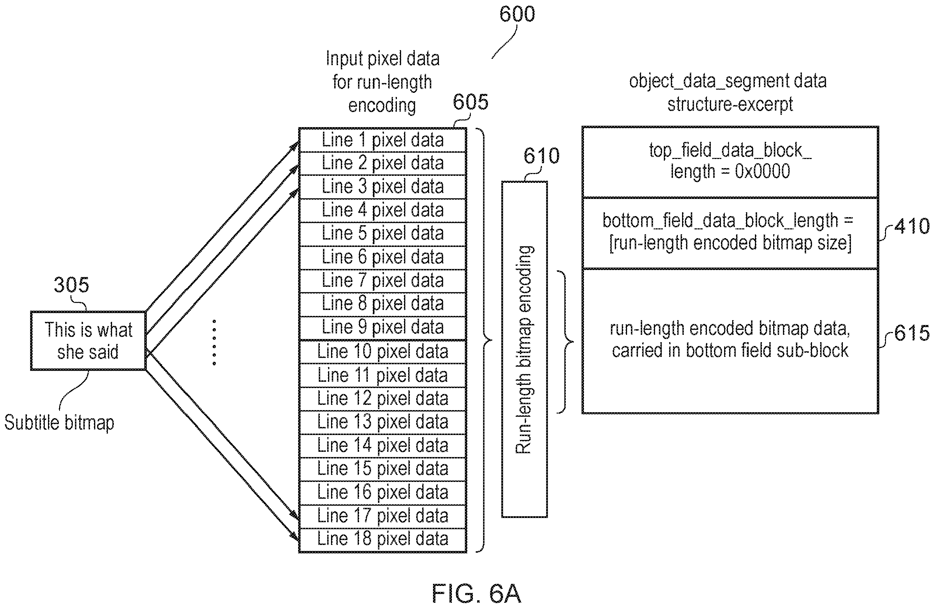

Figure 6A shows a schematic diagram of a progressive type scan subtitle encoding process 600 according to embodiments of the disclosure. The subtitle bitmap 305 is divided into its lines of pixel data for progressive type scan. Figure 6A depicts the subtitle bitmap input data as a series of lines mimicking the shape of the subtitle bitmap. This is just for convenience, since it is known that each pixel-data_sub-block is a contiguous series of byte values, with no delineation according to the shape of the bitmap subtitle. These lines of pixel data are then run-length encoded according to the known method in [1] at 610 and carried in the bottom field of the object_data_segment at 615.

In order that the subtitle decoder 110 understands that the received subtitle bitmap is a progressive type scan, the top_field_data_block_length is set to 0 (zero). In other words, the value of the top_field_data_block_length is 0x0000. The bottom_field_data_block_length is then set to the bitmap size and the entire content of the bitmap in the progressive scan format is sent in the bottom field.

Of course, although Figure 6A shows the subtitle bitmap being sent in the bottom field, it is envisaged that the subtitle bitmap may be sent in the top field. In this instance, the subtitle bitmap 305 will again be divided into its lines of pixel data for progressive type scan. These lines of pixel data are however then encoded in the top field of the object_data_segment.

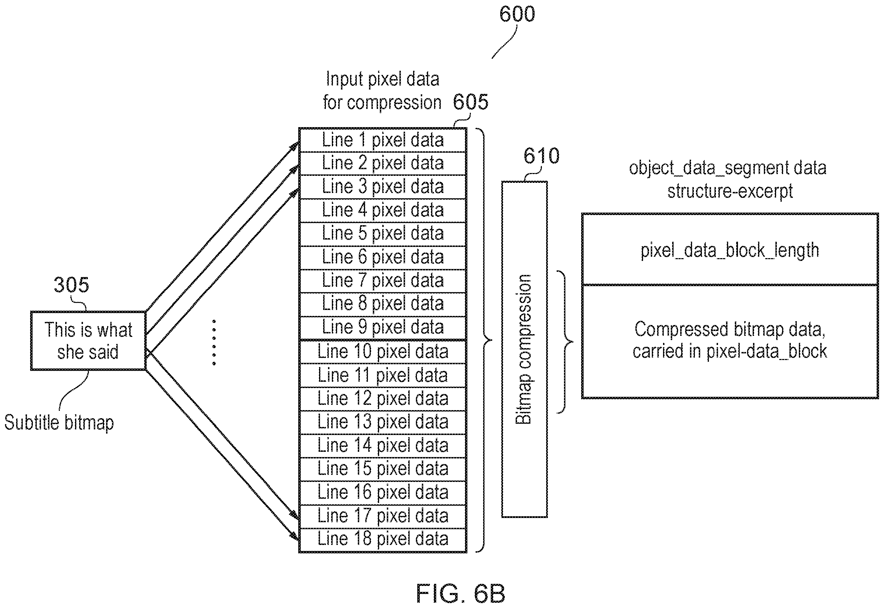

Alternatively, the object_coding_method field may be set to 0b10 (decimal two). In this instance, the lines of pixel data may be compressed using the method described in the present disclosure, i.e. using zlib. The compressed subtitle is carried in the pixel-data block of the object_data_segment at 615. This is shown in Figure 6B.

In order that the subtitle decoder 110 understands that the received subtitle bitmap is a progressive type scan, the reserved bit 510 will be re-defined to signal that the object_data_segment carries a progressive scan bitmap subtitle. This is because [1] already includes the option for setting the bottom_field_data_block_length to the value of zero. In the known object data segment, setting the bottom_field_data_block_length to 0 (zero) means that the top field pixel data is valid for the bottom field, and so effectively repeating the top filled pixel data in the bottom field.

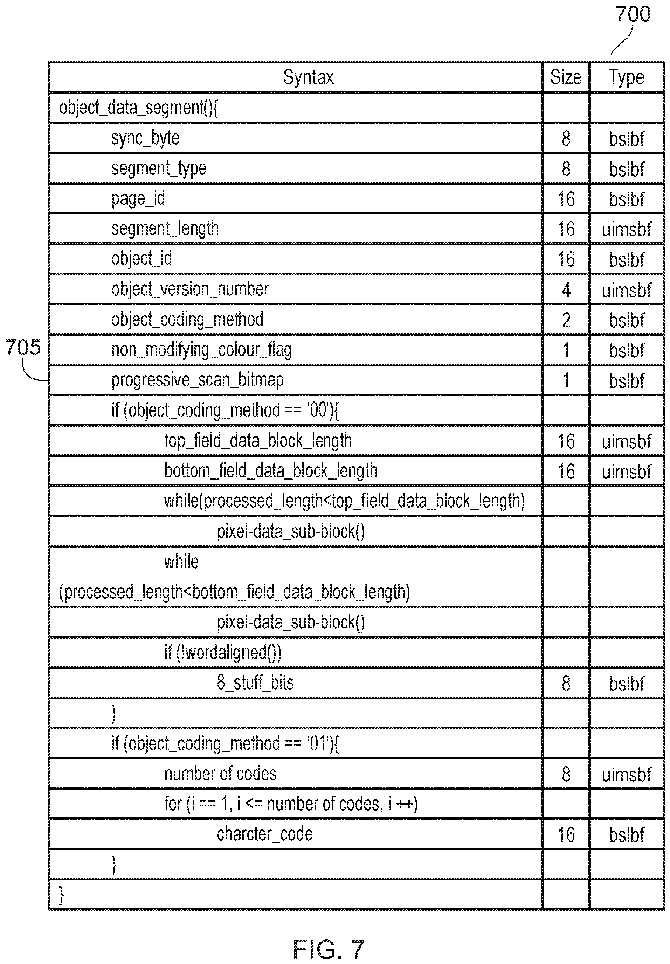

Therefore, in the instance that the value of the bottom_field_data_ block_length is 0x0000, the reserved bit will need to change to a progressive_scan_bitmap bit as will be explained with reference to Figure 7. Of course, although defining the top_field_data_block_length as 0x0000 (zero) would be sufficient to indicate the progressive-type scan and the subtitle bitmap being contained in the bottom field, the progressive_scan_bitmap bit may also be used when the subtitle bitmap is sent in the bottom field.

Continuing with the explanation of the subtitle bitmap being sent in the top field, the top_field_data_block_length is then set to the run-length encoded bitmap size and the entire content of the run-length encoded bitmap in the progressive scan format is sent in the top field.

Alternatively, for the situation in Figure 6B, the object coding method field is set to the value 0b10. Figure 7 shows the object_data_segment structure 700 according to embodiments of the disclosure. In the object_data_segment structure 700 according to embodiments of the disclosure, the object_coding_method field is set to the value 0b10, then the length of the compressed bitmap data is carried as a 16-bit data field, called for example the pixel-data_block_length, then follows the sequence of byte values of the compressed subtitle image, carried in the field named for example pixel-data_block, the reserved bit of Figure 5 is changed to a progressive_scan_bitmap bit 705.

The progressive_scan_bitmap bit may be defined as follows.

Progressive Scan Bitmap: When set to "1", the pixel data contained in the top field pixel-data_sub-block corresponds to a progressively scanned bitmap and no data is contained in the bottom field pixel-data_sub-block, hence the field bottom_field_data_block_length shall be set to the value "0x0000". In this case the previously defined case of bottom_field_data_block_length containing the value "0x0000", meaning the bottom field pixel data is the same as the top field pixel data, does not apply. When progressive_scan_bitmap is set to "0", the subtitle bitmap shall consist of top and bottom fields, and when no pixel data is sent in the bottom field, i.e. bottom_field_data_block_length is set to the value "0x0000", then the data for the top field shall be valid for the bottom field. Alternatively, the object_coding_method field may be set to the value 0b10, then the length of the compressed bitmap data is carried as a 16-bit data field, called for example the pixel_data_block_length, then follows the sequence of byte values of the compressed subtitle image, carried in the field named for example pixel-data_block.

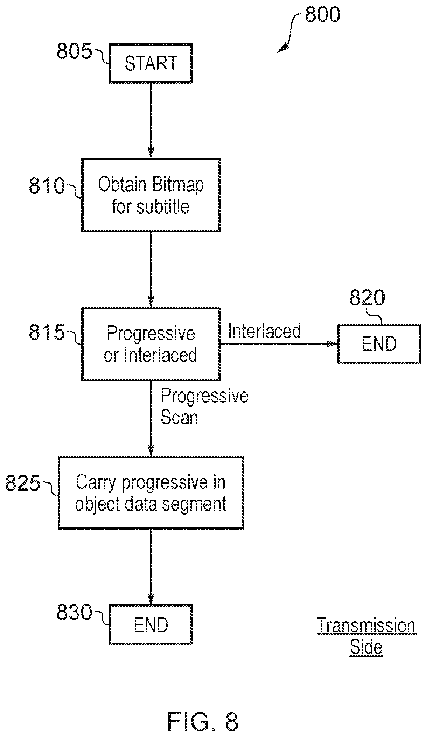

Figure 8 shows a flow chart 800 explaining a process carried out in the subtitle encoder 210. The process 800 starts at step 805. The subtitle bitmap is then obtained in step 810. It is determined at step 815 if the subtitle bitmap is to be an interlaced-type scan the process proceeds in the known manner and ends at step 820. However, if the subtitle bitmap is to be progressive-type scan, the process moves to step 825.

In step 825 it is determined whether the subtitle bitmap is to be carried in the top field or the bottom field. If the subtitle bitmap is to be carried in the bottom field, the top_field_block_length in the object segment data is set to 0x0000 and the bottom_field_data_block_length is set to the bitmap size. Optionally, the progressive_scan_bitmap bit may also be set. The subtitle bitmap is then carried in a progressive type scan in the bottom field.

If the subtitle bitmap is to be carried in the top field, the bottom_field_data_block_length in the object segment data is set to 0x0000 and the top_field_data_block_length is set to the bitmap size. In this case, the progressive_scan_bitmap bit is also set. The subtitle bitmap is then carried in a progressive type scan in the top field.

In an alternative, the input bitmap undergoes a two-stage compression process as applied in the PNG graphics format according to the PNG specification [3], which involves a pre-compression step through filtering (prediction) and then actual compression using the zlib (DEFLATE) algorithm according to RFC1951 [2]. It is known that for indexed colour bitmaps, as adopted for subtitles in the present disclosure, filter type 0 (null filter) is usually the best. When complete, the number of bytes resulting from the compressed bitmap are known, and this number is set in the data field pixel_data_block_length. The compressed data for the progressive bitmap then follow, being represented by the field pixel-data_block.

The process ends at step 830 when the subtitle bitmap is sent.

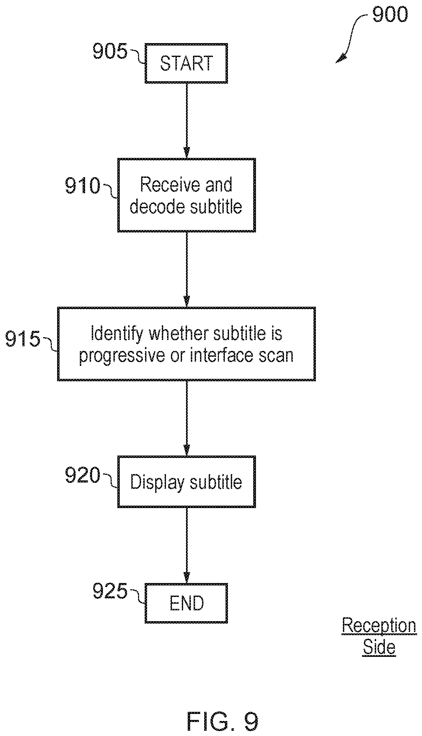

Figure 9 shows a flow chart 900 explaining a process carried out in the subtitle decoder 110. The process starts at step 905. The television receiver 100 receives the encoded television signal. This is received and decoded in step 910.

The subtitle decoder 110 then identifies whether the subtitle is carried in a progressive or interlaced type scan in step 915..

In order to determine that the subtitle bitmap is sent as a progressive type scan, the subtitle decoder 110 identifies whether the top_field_data_block_length is set to 0x000 and the bottom_field_data_block_length is set to a non-zero value. In this case, the subtitle decoder 110 may optionally also identify whether the progressive_scan_bitmap bit is set. In this instance, the subtitle decoder 110 knows that the subtitle bitmap is progressive type scan and sent in the bottom field.

Alternatively, the subtitle decoder 110 may identify whether the bottom_field_data_block_length is set to 0x000 and the top_field_data_block_length is set to a non-zero value. In this case, the subtitle decoder 110 will also identify whether the progressive_scan_bitmap bit is set. In this instance, if the progressive_scan_bitmap is set, the subtitle decoder 110 knows that the subtitle bitmap is progressive type scan and sent in the top field.

Alternatively, if the progressive_scan_bitmap is not set, the subtitle decoder 110 knows that subtitle bitmap is interlace scan and the top field pixel data is valid for the bottom field pixel data.

Of course, if neither the top_field_data_block length or the bottom_field_data_block length are set to 0x000, then the subtitle decoder 110 knows that the subtitle bitmap is interlace scan.

Alternatively, it is possible to determine if the subtitle bitmap is sent as a progressive type scan, by the value of object_coding_method, as described for the encoding process.

The subtitle is then displayed in step 920 and the process ends in step 925.

Although the above describes sending the bitmap in either the top or bottom field in its entirety, the disclosure is not so limited. Indeed, the subtitle bitmap may be split and carried in both the top field and the bottom field. For example, the presence of the progressive_scan_bitmap bit may indicate that the upper half of the subtitle bitmap is carried in the top field and the lower half carried in the bottom field. In this instance, the top_field_data_block_length and the bottom_field_data_block_length would both be non-zero values and the progressive_scan_bitmap bit would identify solely that the subtitle bitmap is progressive type scan and carried in the top field and bottom field in a predetermined manner. This may be predetermined by the Standard or in another manner.

In this case, the definition of the progressive_scan_bitmap bit may change to also include that when set, and the value of top_field_data_block_length and bottom_field_data_block_length are non-zero, then the data in the top field will be a first predefined (already established) segment of the bitmap and the data in the bottom field will be a second predefined (already established) segment of the bitmap.

### Part 2 - Bitmap Compression

As noted above, it is desirable to reduce the amount of data transmitted in the DVB subtitle. According to embodiments of the disclosure, therefore, subtitles are subject to a two-stage compression process as applied in the PNG graphics format according to the PNG specification [3], which involves a pre-compression step through filtering (prediction) and then actual compression using the zlib (DEFLATE) algorithm according to RFC1951 [2], before being embedded in a DVB signal. It is noted here that the compression may apply to subtitles in an interlace scan bitmap or a progressive scan bitmap. This compression will be carried out by the subtitle encoder 210.

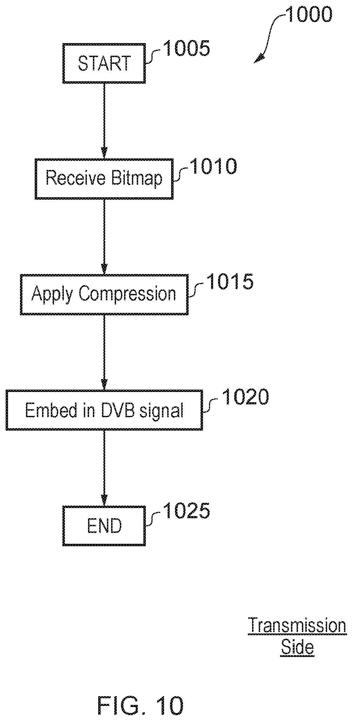

Figure 10 shows a flow diagram of a process 1000 carried out by the subtitle encoder 210.

The process starts at step 1005.

The bitmap to be embedded in the DVB signal is received in step 1010.

The bitmap is then subjected to the compression according to embodiments of the disclosure in step 1015. In embodiments of the disclosure, the two-stage compression process as applied in the PNG graphics format according to the PNG specification [3] is performed. This involves a pre-compression step through filtering (prediction) and then actual compression using the zlib (DEFLATE) algorithm according to RFC1951 [2], i.e. the DEFLATE algorithm, using the conditions and constraints as specified in the PNG specification [3].

The compressed bitmap is then embedded into the DVB signal in step 1020. This embedding forms embodiments of the disclosure.

In section 7.2 of [1], the Syntax and Semantic of the Subtitling Segment are described. Specifically, in table 2, various segments are defined. The mapping between the compressed bitmap and the segments of table 2 will now be described.

The display definition segment of section 7.2.1 of [1] and the page composition segment of section 7.2.2 of [1] are used as currently. The region composition segment of section 7.2.3 of [1] is the same as currently with the exception that the Colour Look-Up Table (CLUT) coding and pixel depth is restricted to 8 bits.

The CLUT definition segment of section 7.2.4 of [1] may be used as currently. Alternatively, the CLUT definition segment of 7.2.4 of [1] may be discarded and replaced with the CLUT definition from [3].

The object data segment of section 7.2.5 of [1] may be used as currently for the interlace scan bitmap. However, for the progressive scan system explained in part 1 above, object_coding_method 0x2 is used which is a new variant in table 8 of 7.2.5 of [1] indicating the carriage of a progressively scanned subtitle object. A new data structure is defined for the carriage of the pixel data according to the present disclosure, referred to here as the pixel-data block. This consists of the width and height of the bitmap and the output of the two-stage compression process on the bitmap data as specified in the PNG specification [3].

The field pixel_data_block_length of the object_data_segment is set to be equal to the number of bytes output by the described two-stage compression process. Of course, this may be split into the top field and bottom field as necessary for interlace scan or as set out above for progressive scan. In the case where two stage compression is applied to interlaced scan bitmaps, there is a separate signal or flag to inform which method is used, but this syntax is not detailed further in the present disclosure.

After the bitmap is compressed and embedded, the process ends in step 1025.

The DVB signal is then transmitted to a television receiver 100 according to embodiments.

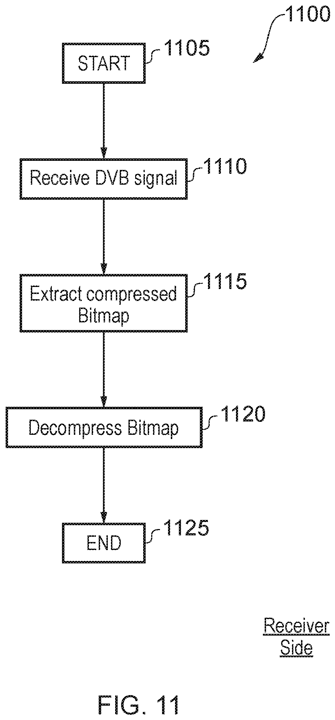

Figure 11 is a flowchart showing a process 1100 carried out by the subtitle decoder 110 in the television receiver 100.

The process 1100 starts at step 1105. The DVB signal received by the television receiver 100 is provided to the subtitle decoder 110 at step 1110. The compressed bitmap subtitle is extracted from the DVB signal in step 1115. The compressed bitmap subtitle is decompressed in step 1120 and the process ends in step 1125. The bitmap is then displayed as the subtitle.

### Part 3 - The Mechanism for Transmission and Reception of PNG subtitles within DVB

As noted above, the use of PNG graphics is increasing. This is because the PNG standard allows graphics having rich capabilities. Inclusion of PNG graphics within DVB provides an interoperability convergence point for different television and media subtitling systems from which adaptations to various delivery systems, including DVB, can be made.

However, as the PNG graphics have rich capabilities, it is not straightforward to simply include PNG graphics in subtitles because television subtitling has limited requirement and therefore bandwidth and processing capability allocated to it. A decoder capable of decoding all of the available features of PNG may not be required. A decoder that addresses the definitions of PNG when used for conveying subtitles may be more computationally efficient, faster and less costly. Where a subtitle decoder shared computational resources such as buses and memory with other functions, processing only the necessary parts of PNG for subtitling may enable shared resources to be used for the other functions. This may improve performance and user experience.

This part of the disclosure addresses this.

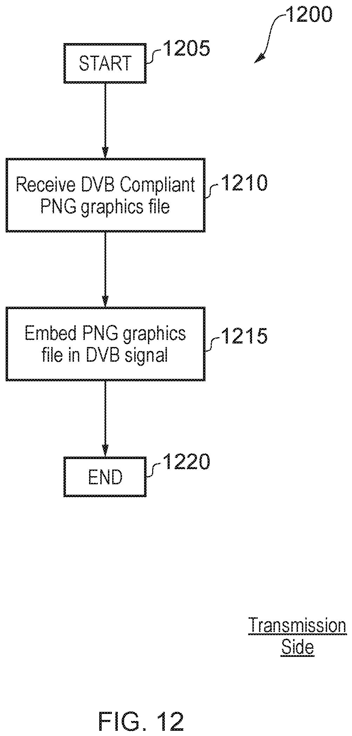

Figure 12 shows a flowchart of a process 1200 according to embodiments of the disclosure. This will be carried out by the subtitle encoder 210.

The process starts at step 1205.

The process moves to step 1210 where the subtitle encoder 210 receives a PNG graphics file according to embodiments of the disclosure that is compliant with the DVB standard.

According to the PNG specification [3], the PNG file shall start with the IHDR image header chunk. Various properties of the PNG image file are either extracted from the IHDR chunk or verified for compatibility with the required DVB subtitle profile.

Firstly, the width and height stored in the IHDR chunk of the PNG file are extracted and entered into the width and height fields respectively of the data structure called the pixel-data_sub-block in the present document.

Secondly, DVB subtitling requires 8 bits per pixel. However, PNG allows between 1 to 16 bits per pixel. Therefore, the PNG graphics file according to embodiments will have only 8 bits per pixel. This value may be verified by the DVB subtitle encoder but it is not necessary to repeat this information in the DVB data structures, since it is assumed.

Thirdly, DVB subtitling supports sRGB colour space handling. Therefore, the PNG graphics file according to embodiments shall indicate sRGB colour space handling. This value may be verified by the DVB subtitle encoder but it is not necessary to repeat this information in the DVB data structures, since it is assumed.

Fourthly, the image within the PNG graphics file will be indexed colour. This will be of the form of a CLUT. The use of a CLUT is efficient compared to transmission of truecolour with alpha and the CLUT is sufficient for subtitles. The image type in the PNG file shall therefore be indexed-colour with a colour type of 3. This value may be verified by the DVB subtitle encoder but it is not necessary to repeat this information in the DVB data structures, since it is assumed. The bit depth in the indexed colour mode of the PNG file shall be 8, which is the same as provided for use with progressively coded subtitle bitmaps in the DVB Standard.

Fifthly, the PNG graphics file contains ancillary information.

This ancillary information may include various further chunk types. One chunk type that is required is the palette table associated with indexed PNG images (PLTE). This contains the CLUT. The data contained in the PLTE chunk is converted into the form of the DVB CLUT Definition Segment, so that an equivalent CLUT is generated for the correct reproduction of the subtitle by the subtitle decoder.

Since the DVB CLUT Definition Segment contains the parameters of luminance (Y) and the colour components Cr and Cb, a conversion is done from RGB to derive the values for the DVB CLUT must be performed.

Another chunk type that is required is the image data chunks (IDAT). This contains the compressed subtitle image data.

Another chunk type that is, in embodiments, required is the trNS, i.e. transparency chunk. In the indexed colour mode of PNG this chunk contains an alpha value for each CLUT entry. The DVB subtitle encoder reads the alpha values from the tRNS chunk and enters the equivalent values into the transparency, i.e. "T" values in the DVB CLUT Definition Segment.

Other ancillary information is optional. For example, the background colour of the subtitle may be provided in the "background colour" ancillary information.

The "textual data" ancillary information may also be provided. In the event that this information is present, it is envisaged that the textual data of the subtitle will be included in this field. The provision of the textual data allows the television receiver 100 to perform some action, for example trigger a notification to the user based on the content of the textual data. Moreover, a text-to-speech algorithm may read out the textual data to improve accessibility for people who are visually impaired. The textual data may act as a reference point in the timeline of the content that the user may choose to seek and start playback at that point. Indeed, the presence of a keyword within the textual data may even cause a recording of the content to be started, based on the viewer having searched for the keyword. Coding in the textual data could also be provided to ensure correct or improved pronunciation. Some words in the textual data may be delimited with marking characters known at a receiver to indicate how a text-to-speech engine should pronounce the word. For example:
IEEE: ~~I triple E~~
Caius College: ~~keys college~~
Sky Spts: ~~Sky Sports~~

In embodiments, where the decoder can display the textual data the delimited pronunciation hints are not displayed. Textual data provided other purposes may or may not be displayed by the decoder for viewing by a user

The "time" ancillary information may be provided. This indicates the display time of the subtitle relative to the display of the accompanying content item. Of course, the "time" may also be an absolute time at which the subtitle is to be displayed. This allows the television receiver 100 to know when to display the subtitle in embodiments where the usual method of using the Presentation Time Stamp as defined by the Motion Picture Experts Group (MPEG) is not used.

The "physical pixel dimensions" ancillary information may be provided. If present it shall indicate a square pixel format as required by the DVB subtitle. This value may be verified by the DVB subtitle encoder but it is not necessary to repeat this information in the DVB data structures, since it is assumed.

As this modified PNG graphics file profile is fully compliant of the PNG format, the PNG profile may be registered as described in [3]. By registering the profile, this will enable the signalling of the conformance of corresponding PNG files that are compliant with usage as DVB subtitle objects, for example in the processes of subtitle creation and exchange.

The process moves to step 1215, where the PNG profile subtitle is embedded in the DVB signal for transmission.

In order to embed the PNG profile subtitle in a DVB signal, all necessary information (as described above) is extracted and re-inserted or converted as necessary into the DVB subtitle data structure. All chunk headers and contents in the PNG file may be discarded. Only the contents of the critical chunks IHDR and PLTE, and of the ancillary chunk tRNS need to be extracted and maintained or converted in this process.

The PLTE information which includes the CLUT in PNG format, and the tRNS chunk containing alpha values for each CLUT entry, are converted into a CLUT definition segment conforming to the CLUT definition segment of 7.2.4 of [1].

The headers within the IDAT chunks are removed and the remaining image data is concatenated. The length of the concatenated image data is calculated and the calculated value is stored in the pixel_data_block_length field in the object data segment of 7.2.5 of [1]. The value of the object coding type is set depending on whether an interlace scan or progressive scan is performed. The concatenated image data is then stored as the pixel-data block in the DVB object data segment. Again, the value of the object coding type is set depending on whether an interlace scan or progressive scan is performed.

The process ends at step 1220.

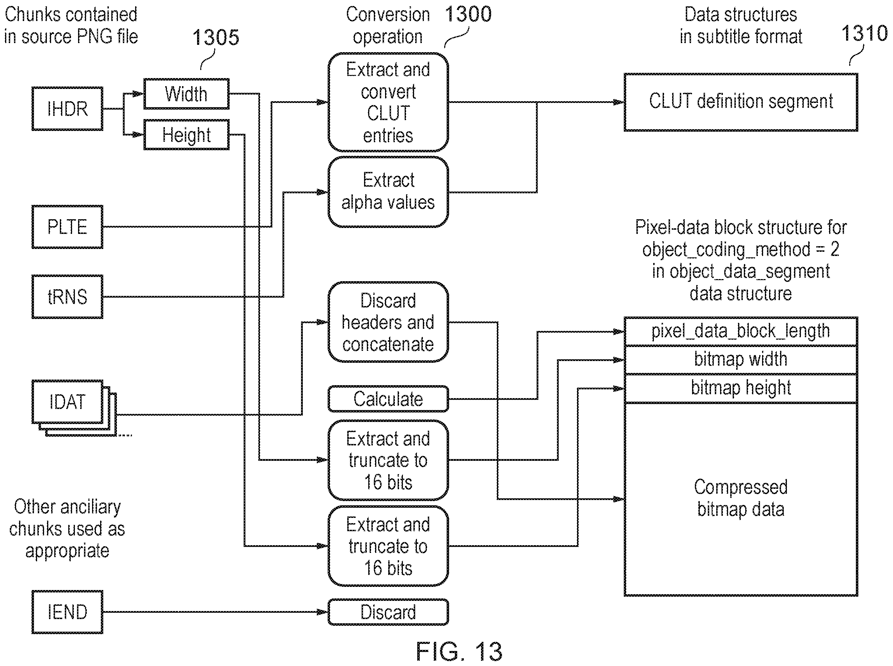

The conversion process steps for a PNG file that is compliant with the requirement of the DVB subtitle is depicted in Figure 13.

In Figure 13, the chunks contained in the source PNG, as noted above are the IHDR, PLTE, tRNS and IDAT. The other ancillary chunks noted above are used as appropriate. The IEND chunk (which marks the end of the PNG file) is discarded. The various chunks are shown in 1305 of Figure 13.

During the conversion process of 1300, the PLTE chunk is extracted and the CLUT entries converted as described in relation to Figure 12. The alpha values from the tRNS are extracted and, together with the CLUT entries of the PLTE, form the CLUT definition segment as explained in Figure 12.

The IDAT data has the headers removed and is concatenated. The size of the concatenated data is calculated. The calculated value is inserted as the pixel_data_block_length and the concatenated data is inserted into the compressed bitmap data field. The width of the IHDR is extracted and truncated to 16 bits. This value is inserted as the bitmap_width field in the object_data_segment data structure. The height of the IHDR is extracted and truncated to 16 bits. This value is inserted as the bitmap_height field in the object_data_segment data structure. The truncation to 16 bits occurs due to the constraints in TV screen pixel sizes.

The data structures in the subtitle format are shown in 1310.

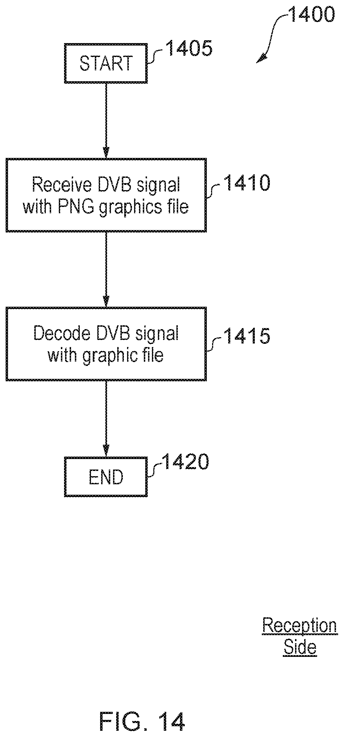

Figure 14 shows a flowchart of a process 1400 according to embodiments of the disclosure. This will be carried out by the subtitle decoder 110.

The process starts at step 1405.

The subtitle decoder 110 receives the DVB signal with the PNG graphics file embedded. This is step 1410.

The DVB signal is decoded in step 1415. The process ends in step 1420 after which the subtitle is rendered on the display. In rendering the subtitle, the television receiver 100 assumes that the colour system for the rendering is sRGB. Additionally, the bit depth of the pixel coding is 8 bits per pixel, whereby the pixel value represents the index of the associated CLUT.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machinereadable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors. Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique, as defined in the claims.

### Reference

[1] ETSI TS 300 743 v1.5.1 (2014-01); DVB Digital Video Broadcasting (DVB); Subtitling systems.

## Claims

1. A subtitle encoding device comprising:
controller circuitry configured to:
receive a Portable Network Graphics, PNG, file, wherein, the PNG file comprises image data chunks and a palette table including a colour look-up table;
convert the colour look up table into a Digital Video Broadcasting, DVB, colour look-up table definition segment, the conversion comprising deriving parameters of luminance, Y, and colour components, Cr and Cb, from RGB values;
remove headers from the image data chunks and concatenate and store the remaining image data of the image data chunks with the headers removed as a pixel data block in a DVB object data segment, the object data segment indicating a progressive type scan object coding method; and
encode the colour look-up table definition segment and the pixel data block for embedding in a DVB signal as a subtitle in an image, the pixel data block being encoded using a progressive type scan;
wherein the PNG file is for progressive type scan and uses an indexed colour mode with a colour type of 3, has a bit depth of 8, is filtered with filter type 0 and is compressed using a DEFLATE algorithm

2. An encoding device according to claim 1, wherein the PNG file includes a textual data field comprising text replicating at least part of the image data.

3. An encoding device according to claim 1, wherein the PNG file includes a time field indicative of the display time of the subtitle relative to the display of the image.

4. An encoding device according to claim 1, wherein the PNG file includes a time field indicative of the absolute display time of the subtitle.

5. An encoding device according to claim 1, wherein the PNG file includes a fixed physical pixel dimension field.

6. An encoding device according to claim 1, wherein the PNG file uses sRGB colour space.

7. A system comprising:
a subtitle encoding device according to claim 1; and
a subtitle decoding device comprising:
controller circuitry configured to:
receive an encoded image in a DVB signal from the subtitle encoding device, the encoded image being a subtitle bitmap compressed by encoding using a progressive type scan;
determine, from an object data segment of the received DVB signal indicating a progressive type scan object coding method, that the encoded image has been compressed using a progressive type scan;
extract the compressed subtitle bitmap; and
decompress the compressed subtitle bitmap to decode the encoded image.

8. A subtitle encoding method comprising:
receiving a Portable Network Graphics, PNG, file, wherein, the PNG file comprises image data chunks and a palette table including a colour look-up table;
converting the colour look up table into a Digital Video Broadcasting, DVB, colour look-up table definition segment, the conversion comprising deriving parameters of luminance, Y, and colour components, Cr and Cb, from RGB values;
removing headers from the image data chunks and concatenating and storing the remaining image data of the image data chunks with the headers removed as a pixel data block in a DVB object data segment, the object data segment indicating a progressive type scan object coding method; and
encoding the colour look-up table definition segment and the pixel data block for embedding in a DVB signal as a subtitle in an image, the pixel data block being encoded using a progressive type scan;
wherein the PNG file is for progressive type scan and uses an indexed colour mode with a colour type of 3, has a bit depth of 8, is filtered with filter type 0 and is compressed using a DEFLATE algorithm.

9. An encoding method according to claim 8, wherein the PNG file includes a textual data field comprising text replicating at least part of the image data.

10. An encoding method according to claim 8, wherein the PNG file includes a time field indicative of the display time of the subtitle relative to the display of the image.

11. An encoding method according to claim 8, wherein the PNG file includes a time field indicative of the absolute display time of the subtitle.

12. An encoding method according to claim 8, wherein the PNG file includes a fixed physical pixel dimension field.

13. An encoding method according to claim 8, wherein the PNG file uses sRGB colour space.

14. A subtitle encoding and decoding method comprising:
a subtitle encoding method according to claim 8;
receiving an encoded image in a DVB signal from the subtitle encoding method of claim 8, the encoded image being compressed by encoding using a progressive type scan;
determining, from an object data segment of the received DVB signal indicating a progressive type scan object coding method, that the encoded image has been compressed using a progressive type scan;
extracting the compressed subtitle bitmap; and
decompressing the compressed subtitle bitmap to decode the encoded image.

15. Computer readable storage medium configured to store a computer program which, when loaded onto a computer, configures the computer to perform a method according to claim 8.

## Patentansprüche

1. Untertitelcodierungsvorrichtung, *Folgendes umfassend:*
Steuerschaltung, die für Folgendes konfiguriert ist:
Empfangen einer PNG-, Portable-Network-Graphics-, Datei, wobei die PNG-Datei Bilddatenblöcke und eine Palettentabelle, die eine Farbennachschlagetabelle beinhaltet, umfasst,
Umwandeln der Farbennachschlagetabelle in ein DVB-, Digital-Video-Broadcasting-, Farbennachschlagetabellendefinitionssegment, wobei die Umwandlung das Ableiten von Parametern der Leuchtkraft, Y, und Farbkomponenten, Cr und Cb, von RGB-Werten umfasst,
Entfernen von Headern aus den Bilddatenblöcken und Verknüpfen und Speichern der verbleibenden Bilddaten der Bilddatenblöcke mit den entfernten Headern als einen Pixeldatenblock in einem DVB-Objektdatensegment, wobei das Objektdatensegment ein Vollbildverfahren zum Codieren eines Objekts angibt, und
Codieren des Farbennachschlagetabellendefinitionssegments und des Pixeldatenblocks zum Einbetten in ein DVB-Signal als einen Untertitel in einem Bild, wobei der Pixeldatenblock mit Hilfe eines Vollbildverfahrens codiert wird,
wobei die PNG-Datei für das Vollbildverfahren vorgesehen ist und einen indizierten Farbmodus mit einem Farbtyp von 3 verwendet, eine Bittiefe von 8 aufweist, mit einem Filter Typ 0 gefiltert ist und mit Hilfe eines DEFLATE-Algorithmus komprimiert ist.

2. Codierungsvorrichtung nach Anspruch 1, wobei die PNG-Datei ein Textdatenfeld beinhaltet, das Text umfasst, der mindestens einen Teil der Bilddaten nachbildet.

3. Codierungsvorrichtung nach Anspruch 1, wobei die PNG-Datei ein Zeitfeld beinhaltet, das die Anzeigezeit des Untertitels relativ zu der Anzeige des Bildes angibt.

4. Codierungsvorrichtung nach Anspruch 1, wobei die PNG-Datei ein Zeitfeld beinhaltet, das die absolute Anzeigezeit des Untertitels angibt.

5. Codierungsvorrichtung nach Anspruch 1, wobei die PNG-Datei ein Feld mit fester Abmessung in physischen Pixeln beinhalte.

6. Codierungsvorrichtung nach Anspruch 1, wobei die PNG-Datei den sRGB-Farbraum verwendet.

7. System, Folgendes umfassend:
eine Untertitelcodierungsvorrichtung nach Anspruch 1, und
eine Untertiteldecodierungsvorrichtung, die Folgendes umfasst:
Steuerschaltung, die für Folgendes konfiguriert ist:
Empfangen eines codierten Bildes in einem DVB-Signal von der Untertitelcodierungsvorrichtung, wobei das codierte Bild eine Untertitel-Bitmap ist, die durch Codieren mit Hilfe eines Vollbildverfahrens komprimiert ist,
Bestimmen, dass das codierte Bild mit Hilfe eines Vollbildverfahrens komprimiert wurde, aus einem Objektdatensegment des empfangenen DVB-Signals, das ein Vollbildverfahren zum Codieren eines Objekts angibt,
Extrahieren der komprimierten Untertitel-Bitmap und
Dekomprimieren der komprimierten Untertitel-Bitmap, um das codierte Bild zu decodieren.

8. Untertitelcodierungsverfahren, Folgendes umfassend:
Empfangen einer PNG-, Portable-Network-Graphics-, Datei, wobei die PNG-Datei Bilddatenblöcke und eine Palettentabelle, die eine Farbennachschlagetabelle beinhaltet, umfasst,
Umwandeln der Farbennachschlagetabelle in ein DVB-, Digital-Video-Broadcasting-, Farbennachschlagetabellendefinitionssegment, wobei die Umwandlung das Ableiten von Parametern der Leuchtkraft, Y, und Farbkomponenten, Cr und Cb, von RGB-Werten umfasst,
Entfernen von Headern aus den Bilddatenblöcken und Verknüpfen und Speichern der verbleibenden Bilddaten der Bilddatenblöcke mit den entfernten Headern als einen Pixeldatenblock in einem DVB-Objektdatensegment, wobei das Objektdatensegment ein Vollbildverfahren zum Codieren eines Objekts angibt, und
Codieren des Farbennachschlagetabellendefinitionssegments und des Pixeldatenblocks zum Einbetten in ein DVB-Signal als einen Untertitel in einem Bild, wobei der Pixeldatenblock mit Hilfe eines Vollbildverfahrens codiert wird,
wobei die PNG-Datei für das Vollbildverfahren vorgesehen ist und einen indizierten Farbmodus mit einem Farbtyp von 3 verwendet, eine Bittiefe von 8 aufweist, mit einem Filter Typ 0 gefiltert ist und mit Hilfe eines DEFLATE-Algorithmus komprimiert ist.

9. Codierungsverfahren nach Anspruch 8, wobei die PNG-Datei ein Textdatenfeld beinhaltet, das Text umfasst, der mindestens einen Teil der Bilddaten nachbildet.

10. Codierungsverfahren nach Anspruch 8, wobei die PNG-Datei ein Zeitfeld beinhaltet, das die Anzeigezeit des Untertitels relativ zu der Anzeige des Bildes angibt.

11. Codierungsverfahren nach Anspruch 8, wobei die PNG-Datei ein Zeitfeld beinhaltet, das die absolute Anzeigezeit des Untertitels angibt.

12. Codierungsverfahren nach Anspruch 8, wobei die PNG-Datei ein Feld mit fester Abmessung in physischen Pixeln beinhalte.

13. Codierungsverfahren nach Anspruch 8, wobei die PNG-Datei den sRGB-Farbraum verwendet.

14. Untertitelcodierungs- und -decodierungsverfahren, Folgendes umfassend:
ein Untertitelcodierungsverfahren nach Anspruch 8,
Empfangen eines codierten Bildes in einem DVB-Signal von dem Untertitelcodierungsverfahren nach Anspruch 8, wobei das codierte Bild durch Codieren mit Hilfe eines Vollbildverfahrens komprimiert ist,
Bestimmen, dass das codierte Bild mit Hilfe eines Vollbildverfahrens komprimiert wurde, aus einem Objektdatensegment des empfangenen DVB-Signals, das ein Vollbildverfahren zum Codieren eines Objekts angibt,
Extrahieren der komprimierten Untertitel-Bitmap und
Dekomprimieren der komprimierten Untertitel-Bitmap, um das codierte Bild zu decodieren.

15. Computerlesbares Speichermedium, das dafür konfiguriert ist, ein Computerprogramm zu speichern, das, wenn es in auf einen Computer geladen ist, den Computer konfiguriert, ein Verfahren nach Anspruch 8 durchzuführen.

## Revendications

1. Dispositif de codage de sous-titres comprenant :
des circuits de commande configurés de façon à :
recevoir un fichier Portable Network Graphics, PNG, ce fichier PNG comprenant des fragments de données d'image et une table de palette de couleurs comprenant une table de consultation de couleurs ;
convertir la table de consultation de couleurs en un segment de définition de table de consultation de couleurs Digital Video Broadcasting, DVB, cette conversion comprenant l'obtention de paramètres de luminance, Y, et de composantes de couleur, Cr et Cb, à partir de valeurs RGB ;
enlever les en-têtes des fragments de données d'image et concaténer et stocker les données d'image restantes des fragments de données d'image avec les en-têtes enlevées comme un bloc de données de pixels dans un segment de données d'objet DVB, ce segment de données d'objet indiquant un procédé de codage d'objet par balayage de type progressif ; et de façon à
coder le segment de définition de la table de consultation de couleurs et le bloc de données de pixels pour les incorporer dans un signal DVB comme un sous-titre dans une image, le bloc de données de pixels étant codé en utilisant un balayage de type progressif ;
le fichier PNG étant pour un balayage de type progressif et utilisant un mode de couleurs indexées avec un type de couleur de 3, ayant une profondeur de bit de 8, étant filtré avec un filtre de type 0 et étant compressé en utilisant un algorithme DEFLATE.

2. Dispositif de codage selon la revendication 1, dans lequel le fichier PNG comprend un champ de données textuelles comprenant un texte reproduisant au moins une partie des données d'image.

3. Dispositif de codage selon la revendication 1, dans lequel le fichier PNG comprend un champ de temps indicatif du temps d'affichage du sous-titre par rapport à l'affichage de l'image.

4. Dispositif de codage selon la revendication 1, dans lequel le fichier PNG comprend un champ de temps indicatif du temps d'affichage absolu du sous-titre.

5. Dispositif de codage selon la revendication 1, dans lequel le fichier PNG comprend un champ de dimension de pixels physique fixe.

6. Dispositif de codage selon la revendication 1, dans lequel le fichier PNG utilise un espace colorimétrique sRGB.

7. Système comprenant :
un dispositif de codage de sous-titres selon la revendication 1 ; et
un dispositif de décodage de sous-titres comprenant :
des circuits de commande configurés de façon à :
recevoir une image codée dans un signal DVB provenant du dispositif de codage de sous-titres, cette image codée étant une table de bits de sous-titre compressée par codage en utilisant un balayage de type progressif ;
déterminer, à partir d'un segment de données d'objet du signal DVB reçu indiquant un procédé de codage d'objet par balayage de type progressif, que l'image codée a été compressée en utilisant un balayage de type progressif ;
extraire la table de bits de sous-titre compressée ; et de façon à
décompresser la table de bits de sous-titre compressée afin de décoder l'image codée.

8. Procédé de codage de sous-titres comprenant :
la réception d'un fichier Portable Network Graphics, PNG, ce fichier PNG comprenant des fragments de données d'image et une table de palette de couleurs comprenant une table de consultation de couleurs ;
la conversion de la table de consultation de couleurs en un segment de définition de table de consultation de couleurs Digital Video Broadcasting, DVB, cette conversion comprenant l'obtention de paramètres de luminance, Y, et de composantes de couleur, Cr et Cb, à partir de valeurs RGB ;
l'enlèvement d'en-têtes des fragments de données d'image et la concaténation et le stockage des données d'image restantes des fragments de données d'image avec les en-têtes enlevés comme un bloc de données de pixels dans un segment de données d'objet DVB, ce segment de données d'objet indiquant un procédé de codage d'objet par balayage de type progressif ; et
le codage du segment de définition de la table de consultation de couleurs et du bloc de données de pixels pour les incorporer dans un signal DVB comme sous-titre dans une image, le bloc de données de pixels étant codé en utilisant un balayage de type progressif ;
le fichier PNG étant pour un balayage de type progressif et utilisant un mode de couleurs indexées avec un type de couleur de 3, ayant une profondeur de bit de 8, étant filtré avec un filtre de type 0 et étant compressé en utilisant un algorithme DEFLATE.

9. Procédé de codage selon la revendication 8, dans lequel le fichier PNG comprend un champ de données textuelles comprenant un texte reproduisant au moins une partie des données d'image.

10. Procédé de codage selon la revendication 8, dans lequel le fichier PNG comprend un champ de temps indicatif du temps d'affichage du sous-titre par rapport à l'affichage de l'image.

11. Procédé de codage selon la revendication 8, dans lequel le fichier PNG comprend un champ de temps indicatif du temps d'affichage absolu du sous-titre.

12. Procédé de codage selon la revendication 8, dans lequel le fichier PNG comprend un champ de dimension de pixels physique fixe.

13. Procédé de codage selon la revendication 8, dans lequel le fichier PNG utilise un espace colorimétrique sRGB.

14. Procédé de codage et de décodage de sous-titres comprenant :
un procédé de codage de sous-titres selon la revendication 8 ;
la réception d'une image codée dans un signal DVB venant du procédé de codage de sous-titres selon la revendication 8, cette image codée étant compressée par un codage utilisant un balayage de type progressif ;
la détermination, à partir d'un segment de données d'objet du signal DVB reçu indiquant un procédé de codage d'objet par balayage de type progressif, que l'image codée a été compressée en utilisant un balayage de type progressif ;
l'extraction de la table de bits de sous-titre compressée ; et
la décompression de la table de bits de sous-titre compressée afin de décoder l'image codée.

15. Support de stockage lisible par ordinateur configuré de façon à stocker un programme informatique qui, lorsqu'il est chargé sur un ordinateur, configure cet ordinateur pour qu'il exécute un procédé selon la revendication 8.
